# EUROPEAN PATENT APPLICATION

(11) **EP 3 168 539 A1**
(43) Date of publication of application: **17.05.2017**
(21) Application number: 16197863.0
(22) Date of filing: 09.11.2016
(51) Int. Cl.: F24D 17/00, F24D 19/10, F28D 20/00

(54) **SYSTEM FOR PRE-HEATING OF DOMESTIC WATER**

(30) Priority: 11.11.2015 IT IT20155486
(71) Applicant: Special-Gas, 26900 Lodi (IT)
(72) Inventor: Sordi, Stefano, 26900 Lodi (IT)
(74) Representative: Serravalle, Marco

(57) **Abstract**

The present invention is addressed to a domestic water pre-heating system comprising: a tank connected to the water-network, a heating coil to heat up the water present in the tank which heating coil is fed by the feed pipe of the boiler and whose exit is the return pipe to the boiler; a heating coil to pre-heat domestic water whose entrance is connected to the cold domestic water pipe and whose exit is connected to the entrance into the boiler of domestic water;
Characterized by the fact that the tank in under atmospheric pressure and the level thereof is regulated by an overflow device. In one embodiment of the invention, the system further comprises some solar collectors fed by the tank water through the feed pipe and the return to the tank of the hot water from collectors.

## Description

. The present invention is directed to a pre-heating system for domestic water. Particularly, the invention is directed to a system allowing pre-heating of domestic water entering domestic boilers.

. Boilers used for heating and supplying domestic hot water are known due to the problem of not being able to immediately supply hot water, but to deliver it after the using tap has been left open and running for a while. This problem leads to a significant loss in terms of liters of unused water, a significant waste of gas, as well as the annoyance for the user due to the greater or lesser waiting time before hot water comes out of the tap.

. Besides, especially during winter time, when boiler is also used for domestic heating and when a higher temperature of water is required, the opening of more than one hot water tap can lead to a supply of water at a temperature not high enough, as the boiler cannot supply the requested quantity of hot water.

. In order to overcome these disadvantages, storage heaters have been proposed. Said boilers include a domestic water container of a greater or lesser dimensions kept at a fixed temperature by the boiler itself. When the hot water tap is opened, water is directly withdrawn from the container and thus quickly reaches the tap. Decrease of temperature in the container activates the boiler which maintains the temperature of the container at the pre-determined value. If the flow rate of hot water is higher compared to the capacity of the boiler, it will result in a slow decrease of the container temperature. The container dimension shall determine how much hot water can be supplied in a short time before the lowering of the container temperature became significant.

. These boilers solve the problem of having water promptly and in high quantity, but significantly increase complexity and costs of boiler itself. In fact, the hot water container has to be under pressure, since the water network which provides water is under pressure. This makes the presence of a large container unpractical because of bulkiness. A container under pressure has necessarily a cylindrical shape and it is not always easy to find in modern small flats the necessary space to install both the boiler and the storage heater.

. The present invention therefore intends to overcome the problems related to traditional storage systems and thus is directed to a pre-heating system of domestic water not requiring tanks under pressure.

. Optionally, the present invention further allows the use of energy coming from thermal solar panels for water pre-heating.

. In one embodiment, the invention consists in a container, preferably of parallelepiped shape, internally insulated, containing a fluid used for storage of thermal energy. Said fluid is preferably water, optionally containing anti-freeze fluid such as glycol.

. The container also contains two heat exchangers, preferably two coils. One coil is connected to the feed pipe of the boiler and it is therefore required to heat the fluid as far as the desired temperature.

. The second coil is instead connected on one end to the net water arrival, and the other end at the entrance of boiler domestic water.

. The system according to the invention also comprises a control unit for the system management, at least one temperature sensor located over the exit of the heat exchanger of domestic water and optionally one mixer mixing the water coming out from the heat exchanger of the domestic water with public domestic water. In this way, if the public water coming through the heat exchanger comes out at a higher temperature compared to the desired one, the mixer mix it with public water and leads the flow to the desired temperature. Then, water goes through the boiler without activating the domestic water heating system of the boiler itself.

. In the event that the output water temperature is lower than requested, the mixer will remain closed and the boiler will compensate the difference by activating the heating of the domestic water system.

. The container can also be connected to solar collectors. In this case, the system includes a pump for the circulation of the fluid from the container to the solar panels. When solar panels are working, the fluid is heated by solar panels and the boiler is activated only in the event that the heat produced by panels is not enough to maintain the temperature to the fixed value.

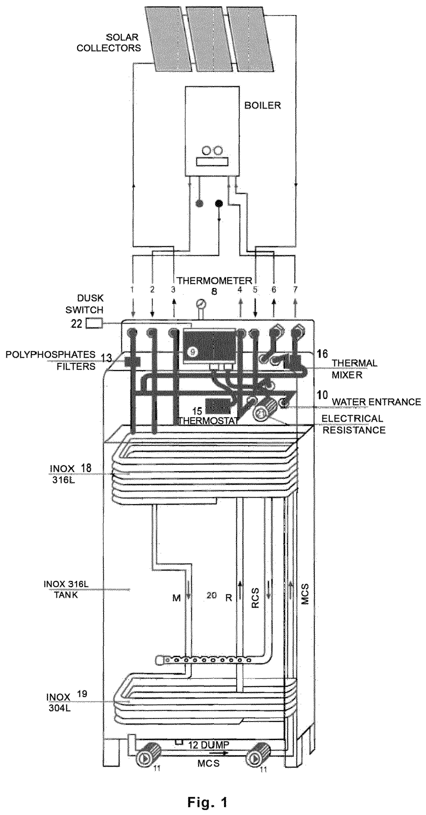

. Fig. 1 represents a preferred embodiment of the invention including the presence of solar panels. (3) indicates the feed pipe of solar collectors, also indicated at the bottom of the tank as MCS. Thus, the water of the tank feeds solar collectors and returns hot from panels (5) and is preferably dispensed inside the tank by a diffuser as shown in the figure. The diffuser facilitates water mixing inside the tank. Cool water for pre-heating enters from (1) and exits from the pre-heating tank (7) after being mixed, where necessary, with cool water to bring the temperature to the desired value, e.g. 38°C. When solar panels are not working, the water inside the tank is heated by the boiler. The water of feed pipe of the boiler enters from (2) and goes through the lower coil of the tank, producing the heating of the tank water. After passing through the coil, it comes back to the boiler from (6). In a preferred embodiment, the system also comprises a dusk switch, to deactivate solar panels when the sun is gone down, and reactivate them at the dawn, a control panel PLC (9), a thermometer (8) and an overflow (4).

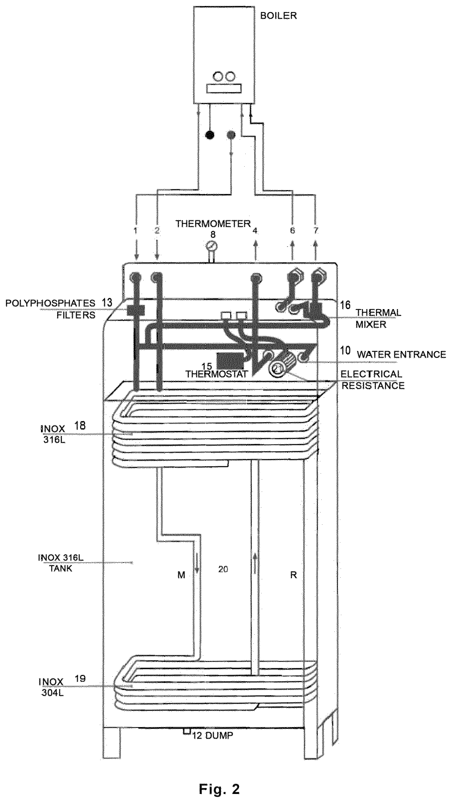

. Fig. 2 refers to another embodiment of the invention not using solar panels. In this case no pipes (3) and (5), respectively of feed pipe and return line to solar panels, will be present. Besides, the dusk switch (22) and the control panel PLC (9) are not needed.

. Preferably, the container has a volume comprised between 100 l and 500 l, more preferably between 100 l and 300 l. The choice of the container volume depends on various factors, such as the available room and the foreseen hot water consumption. For a high number of users a higher volume of container will be preferable (e.g. 300 l). Besides, if the system is combined with thermal solar panels, a larger container allows a better use of solar energy.

. In a preferred embodiment, the tank and the coils are made of inox material, more particularly, the tank and the upper coil of stainless steel 316L while the lower coil is preferably of stainless steel 304L.

. The container of the invention has a very simple functioning. Not being under pressure, it can simply work with a connection to the water-network and an overflow (4) regulating the tank to the desired level. In this way, if for any reason the container level overcame the maximum level, the exceeding fluid would be discharged from overflow (4).

. If the climate requires it, the tank of the system of the invention contains a mix of water and anti-freezing, to guarantee the functioning of the system also when the temperature goes below 0°C.

. On the entrance (1) of the public water is preferably present a filter for water depuration, optionally comprising limescale removers and/or anticorrosive substances, such as, for example polyphosphates dosage filters.

## Claims

1. System for pre-heating of domestic water, which method comprises:
**a.** A Tank connected to the water-network;
b. A heating coil to heat up the water present in the tank, which heating coil is fed by the feed pipe (2) of the boiler and whose exit (6) is the return pipe to the boiler;
c. A heating coil to pre-heat domestic water, whose entrance (1) is connected to the cold domestic water pipe and whose exit (7) is connected to the entrance into the boiler of domestic water;
**characterized by** the fact that the tank is at atmospheric pressure and the level thereof is regulated by an overflow device (4).

2. System according to claim 1, further comprising solar collectors fed by the water of the tank through a feed pipe (3) and return (5) to the tank of the water heated by the solar collectors.

3. System according to claim 2, further comprising a dusk switch (22) and a PLC control panel (9).

4. System according any of the preceding claims, further comprising a thermostatic mixer on the pre-heating coil output, which mixer regulates the temperature of the water of pipe (7) to the desired value.

5. System according any of the preceding claims, wherein domestic water (1) is treated by a filter.

6. System according to claims 2-5, wherein the pipe returning water from the solar collectors (5) comprises a diffuser.
